(19) **Europäisches Patentamt / European Patent Office / Office européen des brevets**

(11) **EP 3 443 841 A1**

(12) **EUROPEAN PATENT APPLICATION**
published in accordance with Art. 153(4) EPC

(43) Date of publication:
**20.02.2019 Bulletin 2019/08**

(21) Application number: **17775597.2**

(22) Date of filing: **31.03.2017**

(51) Int Cl.:
*A01N 33/04* (2006.01)   *A01N 25/34* (2006.01)
*A01N 33/08* (2006.01)   *A01P 1/00* (2006.01)
*A01P 3/00* (2006.01)   *C09D 5/14* (2006.01)
*D06M 15/333* (2006.01)   *D06M 15/61* (2006.01)

(86) International application number:
**PCT/JP2017/013776**

(87) International publication number:
**WO 2017/171066 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.03.2016 JP 2016073213**

(71) Applicant: **Sekisui Chemical Co., Ltd.**
**Osaka-shi, Osaka 530-0047 (JP)**

(72) Inventors:
• **WADA, Yasuko**
**Shunan-shi**
**Yamaguchi 746-0006 (JP)**
• **MATSUKUBO, Tatsuya**
**Shunan-shi**
**Yamaguchi 746-0006 (JP)**
• **ICHITANI, Motokuni**
**Osaka-shi**
**Osaka 530-0047 (JP)**

• **FUKUI, Hiroji**
**Mishima-gun**
**Osaka 618-0021 (JP)**
• **OKUDO, Masazumi**
**Shunan-shi**
**Yamaguchi 746-0006 (JP)**
• **OOTSUKI, Kenichi**
**Osaka-shi**
**Osaka 530-0047 (JP)**
• **SUZUKI, Taro**
**Osaka-shi**
**Osaka 530-0047 (JP)**
• **NISHIHARA, Kazuya**
**Osaka-shi**
**Osaka 530-0047 (JP)**
• **NISHIMURA, Yohei**
**Osaka-shi**
**Osaka 530-0047 (JP)**

(74) Representative: **Cabinet Beau de Loménie**
**158, rue de l'Université**
**75340 Paris Cedex 07 (FR)**

(54) **ANTIBACTERIAL AND ANTIVIRAL COMPOSITION**

(57) The present invention aims to provide an antibacterial and antiviral composition capable of exhibiting antibacterial and antiviral properties in a short period of time and excellent in handleability and safety. The present invention also aims to provide antibacterial and antiviral particles, a processed fabric, a coating material for a processed coating film, a processed coating film, a coating material for a UV-cured coating film, and a UV-cured coating film each prepared using the antibacterial and antiviral composition. Provided is an antibacterial and antiviral composition containing an antibacterial and antiviral polymer compound, the polymer compound being an amino group-containing polymer.

EP 3 443 841 A1

**Description**

TECHNICAL FIELD

The present invention relates to an antibacterial and antiviral composition capable of exhibiting antibacterial and antiviral properties in a short period of time and excellent in handleability and safety. The present invention also relates to antibacterial and antiviral particles, a processed fabric, a coating material for a processed coating film, a processed coating film, a coating material for a UV-cured coating film, and a UV-cured coating film each prepared using the antibacterial and antiviral composition.

BACKGROUND ART

Infectious diseases caused by various viruses (e.g., novel influenza) or bacteria (e.g., O157) are life-threatening diseases, and therefore, it is an urgent need of recent years to take measures globally against such diseases. From this standpoint, needs for antibacterial and antiviral materials are constantly increasing and all sorts of products are desired to have antibacterial and antiviral properties.
A known antibacterial and antiviral material as described above is an antibacterial product formed of a resin containing metal fine particles of silver, copper, zinc, or the like dispersed therein as disclosed in Patent Literature 1.
However, the product is disadvantageous in that it takes time to achieve desired antibacterial properties, failing to have an immediate effect. In addition, metal fine particles have poor dispersibility in resin to cause variation in antibacterial properties.
Chemical agents such as hypochlorous acid or hydrogen peroxide have been used to eliminate the pathogenicity of microorganisms or viruses. However, such chemical agents disadvantageously have a great influence on human bodies or environment. In addition, duration of the effect is disadvantageously short.

CITATION LIST

- Patent Literature

Patent Literature 1: JP 2015-120896 A

SUMMARY OF INVENTION

- Technical Problem

The present invention aims to provide an antibacterial and antiviral composition capable of exhibiting antibacterial and antiviral properties in a short period of time and excellent in handleability and safety. The present invention also aims to provide antibacterial and antiviral particles, a processed fabric, a coating material for a processed coating film, a processed coating film, a coating material for UV-cured coating film, and a UV-cured coating film.

- Solution to problem

The present invention relates to an antibacterial and antiviral composition containing: a polymer compound having antibacterial and antiviral properties, the polymer compound being an amino group-containing polymer.
The present invention is specifically described in the following.
As a result of intensive studies, the present inventors found out that the use of an amino group-containing polymer as a material for developing antibacterial and antiviral properties enables achievement of desired antibacterial and antiviral properties in a short period of time, realizing high immediate effectiveness. They also found out that the polymer is excellent in handleability and safety compared to conventional antibacterial and antiviral materials. Thus, the present invention was completed.
The antibacterial and antiviral composition of the present invention contains a polymer compound having antibacterial and antiviral properties.
The polymer compound is an amino group-containing polymer.
The antibacterial and antiviral composition containing such a polymer compound can suppress propagation of bacteria and viruses.
Examples of the amino group-containing polymer include polyvinyl amine, polyallylamine, polylysine, polyethylene polyamine resin, polyethylene imine (ring-opening polymer of ethylene imine), as well as amino group-containing polyvinyl alcohol, amino group-containing polyvinyl acetal, and amino group-containing celluloses.

Examples of the celluloses include cellulose, methyl cellulose, carboxymethyl cellulose, and carboxymethylpropyl cellulose.

The polymer compound preferably has an amino group and a hydroxy group in the same molecule. Examples of such a polymer compound include amino group-containing polyvinyl alcohol, amino group-containing polyvinyl acetal, and amino group-containing celluloses.

In particular, the amino group-containing polyvinyl alcohol is suitably used because it allows the amino group and the hydroxy group to be present close to each other and thereby lowers the viral activity more effectively.

The amino group and hydroxy group in the polymer compound may be bonded to a side chain of the polymer directly or via a different linking group.

Examples of the linking group include amide, alkylene, ester, and ether groups. In particular, a combination of an amino group and an alkylene group is preferred.

The amino group-containing polymer may contain, in addition to the amino group, a sulfonic acid group, a phosphoric acid group, and a carboxyl group, for example.

One type of the polymer compound may be used alone, or two or more types of the polymer compounds may be used in combination.

In the case of using one type of the polymer compound alone, a polymer having an amino group and a hydroxy group in the same molecule is preferably used.

In the case of using two or more types of the polymer compounds in combination, multiple types of polymers having an amino group and a hydroxy group in the same molecule may be used. Preferably, a combination of a polymer having an amino group and a hydroxy group in the same molecule and a polymer having an amino group alone is used.

Examples of such a combination include a combination of amino group-containing polyvinyl alcohol and polyvinyl amine.

The polymer compound preferably has an effective amine value of 10 to 1,200 mgKOH/g. When the effective amine value is 10 mgKOH/g or higher, the antibacterial and antiviral properties are more suitably exhibited to provide a better effect. When the effective amine value is 1,200 mgKOH/g or lower, the safety can be ensured. The lower limit of the effective amine value is more preferably 20 mgKOH/g, still more preferably 30 mgKOH/g, while the upper limit thereof is more preferably 600 mgKOH/g, still more preferably 200 mgKOH/g.

The effective amine value is a value representing the total amount of amine actually contained in the resin. Specifically, it is a value of the amount (mg) of potassium hydroxide corresponding to the equivalent of hydrochloric acid needed for neutralizing 1 g of a test sample. In other words, the higher the effective amine value is, the larger the number of effective amino groups is.

The polymer compound is preferably amino group-containing polyvinyl alcohol. The amino group-containing polyvinyl alcohol is specifically described below.

The lower limit of the degree of saponification of the amino group-containing polyvinyl alcohol is preferably 60 mol%. When the degree of saponification is 60 mol% or higher, an aqueous solution thereof can be obtained.

The lower limit of the degree of saponification of the amino group-containing polyvinyl alcohol is more preferably 70 mol%, still more preferably 97 mol%. With the degree of saponification within the above range, the proportion of the amino group and the hydroxy group being adjacent to each other increases to allow the antibacterial and antiviral properties to be more favorably exhibited to provide a better effect.

The upper limit of the degree of saponification of the amino group-containing polyvinyl alcohol is not particularly limited, and is preferably 99.9 mol%.

The degree of saponification is measured in conformity with JIS K6726. The degree of saponification indicates a proportion of a unit actually converted to a vinyl alcohol unit by saponification among units capable of being converted to a vinyl alcohol unit by saponification.

The degree of saponification may be adjusted by any method. The degree of saponification can be appropriately adjusted by changing the saponification conditions, i.e., hydrolysis conditions.

The degree of polymerization of the amino group-containing polyvinyl alcohol is not particularly limited. The lower limit of the degree of polymerization of the amino group-containing polyvinyl alcohol is preferably 300 and the upper limit thereof is preferably 2,000.

When the degree of polymerization is 300 or higher, such a composition is readily subjected to processing with fiber, realizing smooth and supple texture. When the degree of polymerization is 2,000 or lower, impregnation of nonwoven fabric with such a composition is facilitated.

The lower limit of the degree of polymerization of the amino group-containing polyvinyl alcohol is more preferably 500 and the upper limit thereof is more preferably 1,500.

The degree of polymerization is measured in conformity with JIS K6726. The degree of polymerization of polyvinyl alcohol is known to be commonly correlated with the viscosity of the aqueous solution thereof, and therefore, it may be substituted by the viscosity of the aqueous solution. In particular, the viscosity of a 4% by weight aqueous solution is commonly used in place of the degree of polymerization.

The lower limit of the amount of an amino group-containing constitutional unit in the amino group-containing polyvinyl alcohol (amino group-modified amount) is preferably 1.0 mol% and the upper limit thereof is preferably 20 mol%.

When the amount of the amino group-containing constitutional unit is 1.0 mol% or more, the immediate effectiveness can be maintained high. When the amount of the amino group-containing constitutional unit is 20 mol% or less, the antibacterial and antiviral composition can be safely used within a range where alkalinity is not strong.

The lower limit of the amount of the amino group-containing constitutional unit is more preferably 1.2 mol% and the upper limit thereof is more preferably 15 mol%.

With regard to a 4% by weight aqueous solution of the amino group-containing polyvinyl alcohol, the lower limit of the viscosity measured at 20°C is preferably 1 mPa·s and the upper limit thereof is preferably 20 mPa·s. When the viscosity is 1 mPa·s or higher, the solution can be uniformly applied. When the viscosity is 20 mPa·s or lower, the solution can be formed into a thin film. With the viscosity within the above range, the degree of polymerization falls within a desired range to facilitate introduction of bacteria or viruses, which leads to improvement of the antibacterial and antiviral properties. The lower limit of the viscosity is more preferably 3 mPa·s and the upper limit thereof is more preferably 10 mPa·s.

The viscosity can be measured in conformity with JIS K 6726.

The amino group-containing polyvinyl alcohol may be prepared as follows. For example, a vinyl ester is polymerized, and subjected to saponification, i.e., hydrolysis to provide unmodified polyvinyl alcohol. Then, an amino group is added to the unmodified polyvinyl alcohol. Alternatively, the unmodified polyvinyl alcohol is copolymerized with a different amino group-containing monomer.

For the saponification, an alkali or an acid is commonly used. Preferably, an alkali is used for the saponification.

Examples of the vinyl ester include vinyl acetate, vinyl formate, vinyl propionate, vinyl butyrate, vinyl pivalate, vinyl versatate, vinyl laurate, vinyl stearate, and vinyl benzoate.

The vinyl ester may be polymerized by any method. Examples of the polymerization method include solution polymerization, bulk polymerization, and suspension polymerization.

Examples of a polymerization catalyst used in the polymerization of the vinyl ester include 2-ethylhexyl peroxydicarbonate ("Trigonox EHP" available from Tianjin McEIT Co., Ltd.), 2,2'-azobisisobutyronitrile (AIBN), t-butylperoxyneodecanoate, bis(4-t-butylcyclohexyl)peroxydicarbonate, di-n-propylperoxydicarbonate, di-n-butylperoxydicarbonate, di-cetylperoxydicarbonate, and di-s-butylperoxydicarbonate. These polymerization catalysts may be used alone or in combination of two or more thereof.

The polymer obtained by the polymerization of the vinyl ester is preferably polyvinyl ester because the degree of saponification can be easily controlled within a favorable range. The polymer resulting from the polymerization of the vinyl ester may be a copolymer of the vinyl ester and a different monomer. In other words, the polyvinyl alcohol may also be a copolymer of the vinyl ester and a different monomer. Examples of the different monomer, i.e., a comonomer to be copolymerized include olefins, (meth)acrylic acid and salts thereof, (meth)acrylic acid esters, (meth) acrylamide derivatives, N-vinyl amides, vinyl ethers, nitriles, vinyl halogenates, allyl compounds, maleic acid and salts thereof, maleic acid esters, itaconic acid and salts thereof, itaconic acid esters, vinylsilyl compounds, and isopropenyl acetate. These different monomers may be used alone or in combination of two or more thereof.

Examples of the olefins include ethylene, propylene, 1-butene, and isobutene. Examples of the (meth)acrylic acid esters include methyl (meth)acrylate, ethyl (meth)acrylate, n-propyl (meth)acrylate, i-propyl (meth)acrylate, n-butyl (meth)acrylate, and 2-ethylhexyl (meth)acrylate. Examples of the (meth) acrylamide derivatives include acrylamide, n-methylacrylamide, N-ethylacrylamide, N,N-dimethylacrylamide, and (meth)acrylamide propanesulfonic acid and salts thereof. Examples of the N-vinyl amides include N-vinylpyrrolidone. Examples of the vinyl ethers include methyl vinyl ether, ethyl vinyl ether, n-propyl vinyl ether, i-propyl vinyl ether, and n-butyl vinyl ether. Examples of the nitriles include (meth)acrylonitrile. Examples of the vinyl halogenates include vinyl chloride and vinylidene chloride. Examples of the allyl compounds include allyl acetate and allyl chloride. Examples of the vinylsilyl compounds include vinyltrimethoxysilane.

The antibacterial and antiviral composition of the present invention may contain, in addition to the polymer compound, a resin other than the polymer compound (a different resin). The use of such a resin in combination can impart adhesiveness, flexibility, durability, or like properties to the polymer compound.

Examples of the different resin include polyvinyl alcohol, polyvinyl acetal (e.g., butyral resin), celluloses, acrylic urethane resin, acrylic resin, urethane resin, vinyl chloride resin, vinylidene chloride resin, polyolefin resin, polyethylene terephthalate, polyester resin, polystyrene, polyamide resin, polycarbonate resin, ABS resin, rayon, nylon, and aramid.

The antibacterial and antiviral composition of the present invention preferably contains, in addition to the polymer compound, a hydroxy group-containing polymer. The hydroxy group-containing polymer is a polymer containing no amino group. This allows the antibacterial and antiviral composition of the present invention to contain amino groups and hydroxy groups each in a predetermined amount. Such an antibacterial and antiviral composition has better solubility in water or alcohol to facilitate preparation of a drug agent and efficiently lowers the viral activity.

Examples of the hydroxy group-containing polymer include polyvinyl alcohol, polyvinyl acetal, and celluloses.

Examples of the combination of the polymer compound and the hydroxy group-containing polymer include a combination of polyvinyl amine and polyvinyl alcohol, a combination of polyvinyl amine and cellulose, a combination of amino group-containing polyvinyl alcohol and polyvinyl alcohol, a combination of amino group-containing polyvinyl alcohol and cellulose, a combination of polyethylene imine and cellulose, and a combination of polyethylene imine and polyvinyl alcohol.

In the case where the antibacterial and antiviral composition of the present invention contains the polymer compound and a different resin, the amount of the polymer compound is not particularly limited. The lower limit of the amount is preferably 0.1% by weight and the upper limit thereof is preferably 50% by weight. When the amount of the polymer compound is 0.1% by weight or more, the immediate effectiveness can be maintained high. When the amount of the polymer compound is 50% by weight or less, the antibacterial and antiviral composition can be safely used within a range where alkalinity is not strong. The amount of the polymer compound is more preferably 0.5 to 30% by weight.

The antibacterial and antiviral composition of the present invention may optionally contain, in addition to the amino group-containing polyvinyl alcohol, additives such as a plasticizer, a pigment, a surfactant, a lubricant, an antioxidant, or an adhesion imparting agent.

The "antibacterial" properties as used herein include not only properties of preventing propagation of bacteria but also sterilization properties. The "antiviral" properties as used herein refer to properties of inactivating pathogenic viruses.

The antibacterial and antiviral composition of the present invention may have any form, and may be in the form of fiber, fabric such as nonwoven fabric, mesh, film, coating film, sheet, bulk, particle, stick, plate, sponge, solution, coating material, gel, cream, or the like. In particular, it is preferably in the form of sheet, coating film, particle, or fabric such as nonwoven fabric. In addition, it is also preferred that the composition is dissolved or dispersed in water or a mixture of water and an organic solvent (e.g., alcohol) to be used for spraying.

The present invention also encompasses antibacterial and antiviral particles containing the antibacterial and antiviral composition of the present invention.

In the case of being used in the form of particles, the antibacterial and antiviral particles of the present invention can exhibit the antibacterial and antiviral properties in a short period of time, are excellent in handleability and safety, and, when dispersed or dissolved in a solvent, can exhibit excellent antibacterial and antiviral properties even in a small amount.

The antibacterial and antiviral particles of the present invention preferably have an average particle size of 2,000 $\mu$m or less.

More preferably, the average particle size is 100 $\mu$m or less because it enables exertion of the immediate effect within five minutes from the contact with viruses.

The antibacterial and antiviral composition of the present invention may be formed into a fibrous state to be used as a fabric. Alternatively, an untreated fiber surface may be processed with the antibacterial and antiviral composition to provide a fiber having the antibacterial and antiviral composition on its surface, and a fabric may be produced by a conventional method using the obtained fiber. Further, an untreated fabric may be processed with the antibacterial and antiviral composition of the present invention to provide a processed fabric including a fabric having the antibacterial and antiviral composition of the present invention on its surface.

The processed fabric of the present invention enables easy impartment of the antibacterial and antiviral properties to a normal fabric.

With regard to the processed fabric of the present invention, examples of the method of imparting the antibacterial and antiviral composition of the present invention include dipping, spraying, printing, and application.

The fabric includes every kind of fabrics such as woven fabric, knitted fabric, and nonwoven fabric. Examples of the material for the fabric include natural fibers (e.g., cotton, linen, wool), recycled fibers (e.g., rayon), semisynthetic fibers (e.g., acetate, triacetate), and synthetic fibers (e.g., polyester, nylon, acryl, polypropylene, polyethylene).

The present invention also encompasses a coating material for a processed coating film containing the antibacterial and antiviral composition of the present invention and a processed coating film produced from the coating material for a processed coating film of the present invention.

The coating material for a processed coating film of the present invention and the processed coating film produced from the coating material for a processed coating film can easily and extensively impart antibacterial and antiviral properties to target articles. The processed coating film includes a sheet containing the antibacterial and antiviral composition.

The processed coating film may be produced from the coating material for a processed coating film by, for example, applying the antibacterial and antiviral composition of the present invention to a target article by coating or spraying, followed by drying of the composition.

The target article may be formed of any of paper, metal, plastic, and like materials, and may have a planar surface (e.g., sheet, film) or a non-planar surface (e.g., doorknob, strap, and handrail).

The present invention also encompasses a coating material for a UV-cured coating film containing the antibacterial and antiviral composition of the present invention and a UV-curable resin, and a UV-cured coating film produced from the coating material for a UV-cured coating film of the present invention.

The coating material for a UV-cured coating film and the UV-cured coating film of the present invention enables production of a coating film having durability and can exhibit antibacterial and antiviral properties as well as surface protection of a target article.

In the coating material for a UV-cured coating film of the present invention, the amount of the amino group-containing polyvinyl alcohol is preferably 0.1 to 50% by weight.

Examples of the UV-curable resin include acrylic resin, epoxy resin, and aryl resin.

Exemplary applications of the antibacterial and antiviral composition of the present invention include wallpaper, floor materials, curtains, clothing, laundry starch, fabric conditioners, soap, trash cans, food packaging materials, adhesive plasters, bandages, filters (air cleaners), bed clothing (blankets, coverlets, bed sheets), seat coverings (car seats, train seats, aircraft seats), sponges (for cleaning, for dish washing, for filtering), diapers, cleaning utensils, pollution dispersion-preventing materials, sprays, and wet tissue paper.

The antibacterial and antiviral composition of the present invention has an antiviral activity value of preferably 1.5 or higher, more preferably 2 or higher. This enables achievement of high antiviral properties.

The antiviral activity value can be calculated from the virus infectivity titer measured based on the absorbance.

The antibacterial and antiviral composition of the present invention may be produced by any method. It may be directly formed, or produced by applying a liquid (e.g., coating material) containing an amino group-containing polymer to a base or nonwoven fabric, followed by drying.

Any method may be employed for applying the solution containing an amino group-containing polymer using, for example, an extrusion coater, a reverse roller, a doctor blade, an applicator, or a sprayer.

The solution containing an amino group-containing polymer may be a dispersion prepared by dispersing an amino group-containing polymer in a solvent or a solution prepared by dissolving an amino group-containing polymer in a solvent.

Examples of the solvent include water and alcohols. The amount of the amino group-containing polymer in the solution containing an amino group-containing polymer is preferably 0.1 to 50% by weight.

The viscosity of the solution containing an amino group-containing polymer is not particularly defined, and is preferably 100 to 3,000 mPa·s depending on the type or adjustment of the machine in the case of employing coating.

In the case of employing spraying, the amount of the amino group-containing polymer may be set to 5% by weight to adjust the viscosity of the solution to 9 mPa·s, which allows the use of a canyon spray bottle.

- Advantageous Effects of Invention

The present invention provides an antibacterial and antiviral composition capable of exhibiting antibacterial and antiviral properties in a short period of time and excellent in handleability and safety. The present invention also provides antibacterial and antiviral particles, a processed fabric, a coating material for a processed coating film, a processed coating film, a coating material for a UV-cured coating film, and a UV-cured coating film each prepared using the antibacterial and antiviral composition.

DESCRIPTION OF EMBODIMENTS

The present invention is more specifically described in the following with reference to, but not limited to, examples.

(Example 1)

An amount of 5 parts by weight of an amino group-containing polyvinyl alcohol (amino group-containing polyvinyl alcohol, degree of saponification: 99.0 mol%, 4% by weight aqueous solution viscosity: 6.0 mPa·s) was added to 95 parts by weight of an aerosol coating material (available from Tsuchiya Co., Ltd. under the trade name of "Cosmocolor"), and uniformly mixed to prepare an antibacterial and antiviral coating material. The aerosol coating material was a resin coating material containing an acrylic urethane resin, a plasticizer, and a pigment. The 4% by weight aqueous solution viscosity was measured at 20°C in conformity with JIS K 6726.

The obtained antibacterial and antiviral coating material (20 g) was uniformly applied to a polypropylene plate (1 m$^2$) and dried at room temperature for five hours to provide an antibacterial and antiviral molded body. A piece having a planar square shape (5.0 cm on each side) was cut out from the antibacterial and antiviral molded body, and was used as a test piece.

<Effective amine value measuring test>

To accurately weighed sample in an amount of 0.2 g was added 40 ml of DMSO, and the sample was dissolved therein on a hot plate at 70°C for one hour. Then, the resulting solution was allowed to cool to ambient temperature, and 20 ml of ethanol was then added thereto. Thus, a measurement sample was prepared.

The effective amine value of the obtained measurement sample was measured by a method in conformity with JIS K 1557-7 using hexylamine as a reference material, and was 54.8 mgKOH/g. The measurement conditions are listed below.

[Measurement conditions]

Equipment: Titrando (available from Metrohm)
Dosing equipment: 800 Dosino + 807 dosing unit (20ml)
Electrode: Solvotrode (reference electrolyte: 0.4 mol/L TEABr in ethylene glycol)
Titration solution: 0.1 mol/L perchloric acid solution in acetic acid
Substance used for standardization of titration solution: KHP
Titradion mode: DET U

(Example 2)

An antibacterial and antiviral coating material, a molded body, and a test piece were obtained as in Example 1, except that the amino group-containing polyvinyl alcohol was changed to 5 parts by weight of a polyethylene polyamine resin (NEOFIX RP-70 available from Nicca Chemical Co., Ltd., active ingredient: 70%).

(Comparative Example 1)

An antibacterial and antiviral coating material, a molded body, and a test piece were obtained as in Example 1, except that the amino group-containing polyvinyl alcohol was changed to an unmodified polyvinyl alcohol (degree of saponification: 99.0 mol%, 4% by weight aqueous solution viscosity: 7 mPa·s).

(Comparative Example 2)

A molded article and a test piece were obtained as in Example 1, except that 20 g of an aerosol coating material (available from Tsuchiya Co., Ltd. under the trade name of "Cosmocolor"), instead of the antibacterial and antiviral coating material, was uniformly applied to a polypropylene plate (1 m$^2$) and dried at room temperature for five hours.

<Evaluation 1>

The test pieces obtained in Examples 1 to 2 and Comparative Examples 1 to 2 were evaluated as described below. Table 1 shows the results.

(1) Test for confirming anti-influenza properties

(a) Preparation of virus solution

An influenza virus was inoculated to MDCK cells cultured in a 10-cm dish. After culturing at 34°C for one hour, the culture supernatant (containing naive virus) was removed. To the 10-cm dish from which the supernatant had been removed was newly added an EMEM medium. After culturing at 34°C for four days, the culture supernatant was collected to be centrifuged at a rotation speed of 800 rpm for five minutes. The supernatant resulting from the centrifugation was used as a virus solution.

(b) Measurement of virus reduction rate

The virus solution diluted 10 times with an EMEM medium was dripped in an amount of 0.4 mL onto each of the test pieces obtained in the examples and comparative examples, and the resulting test piece was left to stand at room temperature for two hours. Then, the virus solution on the test piece was collected and mixed with an EMEM medium to be diluted 10 times, 100 times, 1,000 times, and 10,000 times. Each dilution was inoculated in an amount of 0.1 mL to MDCK cells sprinkled on a 96-well microplate, and cultured at 34°C for one hour. After the culturing, the culture supernatant (containing naive virus) was removed, and an EMEM medium was added, followed by culturing at 34°C for four days. After removal of the culture supernatant, the virus amount at which 50% of the cells were infected with the virus (Tissue Culture Infectious Dose 50 (TCID50)) was calculated based on the proportion of surviving cells, and the antiviral activity value and the virus reduction rate were obtained. The case where the virus reduction rate was 99.0% or higher was rated "○ (Good)" and the case where the virus reduction rate was lower than 99.0% was rated "× (Poor)".

[Table 1]

| | | Example 1 | Example 2 | Comparative Example 1 | Comparative Example 2 |
|---|---|---|---|---|---|
| Formulation (parts by weight) | Aerosol coating material | 95 | 95 | 95 | 100 |
| | Amino group-containing polyvinyl alcohol | 5 | 0 | 0 | 0 |
| | Polyethylene polyamine resin (NEOFIX RP-70) | 0 | 5 | 0 | 0 |
| | Unmodified polyvinyl alcohol | 0 | 0 | 5 | 0 |
| Test for confirming anti-influenza properties | TCID5O | 2.3 | 2.3 | 5.3 | 5.3 |
| | Antiviral activity value | 2 | 2 | 0 | - |
| | Reduction rate | 99.0% | 99.0% | 0% | - |
| | Effect | ○ | ○ | × | - |

(Example 3)

To a woven fabric made of polyester fiber was applied a 1.0% aqueous solution of an amino group-containing polyvinyl alcohol (amino group-containing polyvinyl alcohol, degree of saponification: 99.0 mol%, 4% by weight aqueous solution viscosity: 6.0 mPa·s, effective amine value: 54.8 mgKOH/g) to a weight per unit area of 1 g/m$^2$, thereby preparing an antibacterial and antiviral fiber. A test piece (0.4 g) was cut out from the obtained antibacterial and antiviral fiber.

(Example 4)

An antibacterial and antiviral fiber and a test piece were obtained as in Example 3, except that the weight per unit area was changed to 5 g/m$^2$.

(Comparative Example 3)

A fiber and a test piece were obtained as in Example 3, except that the amino group-containing polyvinyl alcohol was changed to a 1.0% aqueous solution of an unmodified polyvinyl alcohol (degree of saponification: 99 mol%, 4% by weight aqueous solution viscosity: 7 mPa·s).

(Comparative Example 4)

A test piece was prepared by cutting a woven fabric made of polyester fiber.

<Evaluation 2>

The test pieces obtained in Examples 3 to 4 and Comparative Examples 3 to 4 were evaluated as described below. Table 2 shows the results.

(2) Test for confirming anti-Norovirus properties (a) Preparation of test virus suspension

CRFK cells (feline kidney-derived cells) were infected with feline calicivirus, cultured, and centrifuged to remove cellular debris. Thus, a virus suspension was prepared. The virus suspension was diluted 10 times with sterile distilled water to have a virus titer of 1 to 5 × 10$^7$ PFU/mL. Thus, a test virus suspension was prepared.

(b) Measurement of virus infectivity titer <fabric>

(i) A virus suspension (feline calicivirus [F-9 ATCC VR-782]) was prepared.

(ii) The virus suspension (0.2 mL) was dripped onto each fabric test piece (0.4 g), and left to stand at 25°C for two hours. The virus suspension after the reaction is called a virus stock solution.

(iii) To the virus stock solution was added 20 ml of a SCDLP medium (Soybean-Casein Digest Broth with Lecithin & Polysorbate 80), and vortex for five seconds was performed five times for washing out, thereby extracting 0.1 mL of a washed-out solution.

(iv) The extracted washed-out solution containing the virus stock solution was diluted with a maintenance medium to prepare a dilution series (10 times, 100 times, 1,000 times, 10,000 times, 100,000 times, 1,000,000 times).

(v) The prepared dilution series was inoculated into host cells (MDCK cells: derived from canine kidney cells), and the dilution ratio at which 50% of the cells were infected (tissue culture infective dose for 50% ($TCID_{50}$)) was determined by the Behrens-Karber method. The viral infectivity titer $V_c$ of the virus stock solution was obtained by calculation.

(vi) The antiviral activity value Mv and the reduction rate (%) were obtained using the following equations in which $V_b$ represents the viral infectivity titer at 25°C after two hours in Comparative Example 3.

$$\text{Antiviral activity value (Mv)} = \lg_{10}(V_b) - \lg_{10}(V_c)$$

$$\text{Reduction rate (\%)} = [(V_b - V_c) \times 100]/V_b$$

With regard to the obtained virus reduction rates, the reduction rate of 99.99% or higher was rated "○○ (Excellent)", the reduction rate of lower than 99.99% but not lower than 99.0% was rated "○ (Good)", and the reduction rate of lower than 99.0% was rated "× (Poor)".

Since the virus reduction in a short period of time is evaluated here, a high virus reduction rate can be considered to indicate immediate effectiveness.

[Table 2]

| | | Example 3 | Example 4 | Comparative Example 3 | Comparative Example 4 |
|---|---|---|---|---|---|
| Weight per unit area (g/m²) | Amino group-containing polyvinyl alcohol | 1 | 5 | - | - |
| | Unmodified polyvinyl alcohol | - | - | 1 | - |
| Test for confirming anti-Norovirus properties | Virus infiectivity titer | 3.36 | <2.30 | 7.13 | 7.13 |
| | Antiviral activity value | 3.8 | ≧4.8 | 0 | - |
| | Reduction rate | 99.98% | ≧ 99.99% | 0% | - |
| | Effect | ○ | ○○ | × | - |

(Example 5)

An amino group-containing polyvinyl alcohol (amino group-containing polyvinyl alcohol, degree of saponification: 99.0 mol%, 4% by weight aqueous solution viscosity: 6.0 mPa·s, effective amine value: 54.8 mgKOH/g) was added to purified water to prepare a 5% by weight sample solution.

(Example 6)

A 10% by weight sample solution was prepared using the same amino group-containing polyvinyl alcohol as used in Example 5.

(Comparative Example 5)

An unmodified polyvinyl alcohol (degree of saponification: 99 mol%, 4% by weight aqueous solution viscosity: 7 mPa·s) was added to purified water to prepare a 5% by weight sample solution.

(Comparative Example 6)

A 10% by weight sample solution was prepared using the same unmodified polyvinyl alcohol as used in Comparative Example 5.

(Comparative Example 7)

A liquid consisting only of purified water was used as a sample solution.

<Evaluation 3>

The sample solutions obtained in Examples 5 to 6 and Comparative Examples 5 to 7 were evaluated as described below. Table 3 shows the results.

(3) Viable bacteria count test

(a) Preparation of test bacteria solution

Test bacteria (Escherichia coli and Staphylococcus aureus) were cultured using a normal agar medium (Eiken Chemical Co., Ltd.) at 35°C for 18 to 24 hours, and Escherichia coli was suspended in purified water and Staphylococcus aureus was suspended in saline. The numbers of bacteria were each adjusted to $10^7$ to $10^8$ /mL. Thus, test bacteria solutions were prepared.

Escherichia coli used was Escherichia coli NBRC 3972 and Staphylococcus aureus used was Staphylococcus aureus subsp. aureus NBRC 12732.

(b) Counting of viable bacteria

The test bacteria solution (0.1 mL) was inoculated into the sample solution (10 mL) to provide a test solution. After storage at room temperature for 15 minutes, 1 hour, 6 hours, and 24 hours, the test solution was immediately diluted 1000 times or 100 times with an SCDLP medium (Nihon Pharmaceutical Co., Ltd.). Each dilution of the test solution was cultured at 35°C for two days, and the number of viable bacteria in the test solution was counted using a medium for viable bacteria count.

In the cases where the number of viable bacteria is "<100" and "<1000", antibactreial properties are considered to be present.

[Table 3]

| | | | Example 5 | Example 6 | Comparative Example 5 | Comparative Example 6 | Comparative Example 7 |
|---|---|---|---|---|---|---|---|
| Concentration of sample solution | | | 5 wt% | 10 wt% | 5 wt% | 10 wt% | - |
| Escherichia coli | Degree of dilution with SCDLP medium | | 1000 times | 1000 times | 1000 times | 1000 times | 1000 times |
| | Number of viable bacteria | At start | < 1000 | < 1000 | $7.8 \times 10^5$ | $8.2 \times 10^5$ | $8.0 \times 10^5$ |
| | | 15 Minutes later | < 1000 | < 1000 | * | * | * |
| | | 1 Hour later | < 1000 | < 1000 | $7.6 \times 10^5$ | $7.2 \times 10^5$ | $8.9 \times 10^5$ |
| | | 6 Hours later | < 1000 | < 1000 | $7.9 \times 10^5$ | $7.2 \times 10^5$ | $8.5 \times 10^5$ |
| | | 24 Hours later | < 1000 | < 1000 | $7.5 \times 10^5$ | $6.8 \times 10^5$ | $5.2 \times 10^5$ |
| Staphylococcus aureus | Degree of dilution with SCDLP medium | | 100 times | 1000 times | 100 times | 100 times | 100 times |
| | Number of viable bacteria | At start | < 100 | < 1000 | $6.2 \times 10^5$ | $6.0 \times 10^5$ | $5.5 \times 10^5$ |
| | | 15 Minutes later | < 100 | < 1000 | * | * | * |
| | | 1 Hour later | < 100 | < 1000 | $6.5 \times 10^5$ | $6.0 \times 10^5$ | $6.2 \times 10^5$ |
| | | 6 Hours later | < 100 | < 1000 | $6.3 \times 10^5$ | $5.6 \times 10^5$ | $5.2 \times 10^5$ |
| | | 24 Hours later | < 100 | < 1000 | $5.6 \times 10^5$ | $5.2 \times 10^5$ | $5.8 \times 10^5$ |
| *: Not measured | | | | | | | |

(Example 7)

[Production of polyvinyl alcohol powder]

A polyvinyl alcohol powder having an average particle size of 800 μm formed of an amino group-containing polyvinyl alcohol (amino group-containing polyvinyl alcohol, degree of saponification: 99.0 mol%, 4% by weight aqueous solution viscosity: 6.0 mPa·s, effective amine value: 54.8 mgKOH/g) was obtained.

(Example 8)

[Production of polyvinyl alcohol powder]

A polyvinyl alcohol powder having an average particle size of 800 μm formed of an amino group-containing polyvinyl alcohol (amino group-containing polyvinyl alcohol, degree of saponification: 99.0 mol%, 4% by weight aqueous solution viscosity: 6.0 mPa·s, effective amine value: 75.2 mgKOH/g) was obtained.

(Example 9)

[Production of polyvinyl alcohol powder]

A polyvinyl alcohol powder having an average particle size of 800 μm formed of an amino group-containing polyvinyl alcohol (amino group-containing polyvinyl alcohol, degree of saponification: 99.0 mol%, 4% by weight aqueous solution viscosity: 6.0 mPa·s, effective amine value: 104.3 mgKOH/g) was obtained.

(Comparative Example 8)

[Production of polyvinyl alcohol powder]

A polyvinyl alcohol powder having an average particle size of 800 μm formed of a polyvinyl pyrrolidone (PVP)-containing polyvinyl alcohol (PVP-containing polyvinyl alcohol, degree of saponification: 99.0%, 4% by weight aqueous solution viscosity: 9.0 mPa·s, polyvinyl pyrrolidone group content: 5 mol%) was obtained.

(Comparative Example 9)

[Production of polyvinyl alcohol powder]

A polyvinyl alcohol powder having an average particle size of 800 μm formed of a 2-acrylamido-2-methylpropane sulfonic acid (AMPS)-containing polyvinyl alcohol (AMPS-containing polyvinyl alcohol, degree of saponification: 99.0%, 4% by weight aqueous solution viscosity: 12.0 mPa·s, 2-acrylamido-2-methylpropane sulfonic acid group content: 4 mol%) was obtained.

<Evaluation 4>

The polyvinyl alcohol powders obtained in Examples 7 to 9 and Comparative Examples 8 to 9 were evaluated as described below. Table 4 shows the results.

(4) Test for determining antiviral properties of powder

(a) pH measurement of powder sample in medium

For a solution containing 0.75 g of the obtained polyvinyl alcohol powder and 15 ml of a maintenance medium (EMEM), pH measurement was performed by the method defined in JIS 8802 (2011).
In the above pH measurement, the pH in the reaction between a virus suspension to be mentioned later and the polyvinyl alcohol powder was supposed to be determined. The pH in the case where a virus suspension alone was added was also measured.

12

(b) Antiviral property test <powder>

The antiviral property test of the powder was performed as in the "(b) Measurement of viral infectivity <fabric>" described above, except that the "each fabric test piece (0.4 g)" in the step (ii) was changed to "powder sample (10 mg)" and the amount of the SDCDLP medium in the step (iii) was changed from "20 ml" to "10 ml". The antiviral activity value of 1.5 or higher was rated as "○ (Good)" and the antiviral activity value of lower than 1.5 was rated as "× (Poor)".

[Table 4]

| | | Example 7 | Example 8 | Example 9 | Comparative Example 8 | Comparative Example 9 | Addition of virus suspension alone |
|---|---|---|---|---|---|---|---|
| Amino group-containing polyvinyl alcohol (Effective amine value: 54.8 mgKOH/g) | | 100 wt% | - | - | - | - | - |
| Amino group-containing polyvinyl alcohol (Effective amine value: 75.2 mgKOH/g) | | - | 100 wt% | - | - | - | - |
| Amino group-containing polyvinyl alcohol (Effective amine value: 104.3 mgKOH/g) | | - | - | 100 wt% | - | - | - |
| PVP-containing polyvinyl alcohol (PVP group content: 5 mol%) | | - | - | - | 100 wt% | - | - |
| AMPS-containing polyvinyl alcohol (AMPS group content: 4 mol% ) | | - | - | - | - | 100 wt% | - |
| Antiviral property test | pH | 9.3 | 9.7 | 9.9 | 7.5 | 7.4 | 7.7 |
| | Virus infectivity titer | 3.9 | 2.0 | 2.8 | 5.4 | 5.4 | 5.4 |
| | Antiviral activity value | 1.5 | 3.5 | 2.6 | 0.0 | 0.0 | - |
| | Evaluation | ○ | ○ | ○ | × | × | - |

(Example 10)

[Pulverization of polyvinyl alcohol powder]

The polyvinyl alcohol powder (average particle size: about 800 $\mu$m) produced in Example 9 was pulverized using a pulverizer (Wonder Crusher WC-3L) to prepare a polyvinyl alcohol powder having an average particle size of 140 $\mu$m.

(Example 11)

[Classification of polyvinyl alcohol powder]

A polyvinyl alcohol powder having an average particle size of 65 $\mu$m was obtained by passing the polyvinyl alcohol powder (average particle size: 140 $\mu$m) produced in Example 10 through a sieve (200 mesh, aperture of 75 $\mu$m).

(Example 12)

A polyvinyl alcohol powder having an average particle size of 30 μm was obtained by dissolving the polyvinyl alcohol powder produced in Example 9 in water and spray-drying the obtained aqueous solution for granulation.

<Evaluation 5>

The polyvinyl alcohol powders obtained in Examples 9 to 12 were evaluated as described below for confirming the immediate antiviral effectiveness. The safety of the polyvinyl alcohol powders obtained in Example 10 and other examples was evaluated by the following procedure. Table 5 shows the results.

(a) Antiviral property test (confirmation of immediate effectiveness)

For determining the immediate effectiveness, evaluation was performed as in "(b) Antiviral property test <powder>", except that the contact time between the virus and the sample was changed from two hours to 5 minutes or 10 minutes.
With regard to the obtained virus reduction rates, the case where the antiviral activity values in five-minute contact and in 10-minute contact were both 1.5 or higher was rated "○○ (Excellent)". The case where the antiviral activity value in five-minute contact was lower than 1.5 but the antiviral activity value in 10-minute contact was 1.5 or higher was rated "○ (Good)". The case where the antiviral activity value even in 10-minute contact was lower than 1.5 was rated "× (Poor)".

(b) Test for confirming safety

(i) Acute oral toxicity test

An acute oral toxicity test (mouse) was performed on the polyvinyl alcohol powder obtained in Example 10 by a method in conformity with OECD guideline TG420 (fixed dose procedure). The polyvinyl alcohol powder was confirmed to have an $LD_{50}$ > 2,000 mg/kg, ensuring the safety. The safety of the polyvinyl alcohol powders obtained in Examples 9, 11, and 12 was similarly confirmed.

(ii) Skin irritation test

A skin irritation test (epidermal cells) was performed on the polyvinyl alcohol powder obtained in Example 10 by a method in conformity with OECD guideline TG439 (in vitro). The polyvinyl alcohol powder was confirmed to be a non-irritant, ensuring the safety. The safety of the polyvinyl alcohol powders obtained in Examples 9, 11, and 12 was similarly confirmed.

[Table 5]

| | | Example 9 | Example 10 | Example 11 | Example 12 | Addition of virus suspension alone |
|---|---|---|---|---|---|---|
| Amino group-containing polyvinyl alcohol | Effective amine value (mgKOH/g) | 104.3 | 104.3 | 104.3 | 104.3 | - |
| | Average particle size (μm) | 800 | 140 | 65 | 30 | - |

(continued)

| | | | Example 9 | Example 10 | Example 11 | Example 12 | Addition of virus suspension alone |
|---|---|---|---|---|---|---|---|
| Antiviral property test | Reaction time | Item | | | | | |
| | 5 Minutes | Virus infectivity titer | 4.5 | 4.2 | 2.3 | 2.4 | 5.3 |
| | | Antiviral activity titer | 0.8 | 1.1 | 3.0 | 2.8 | - |
| | 10 Minutes | Virus infectivity titer | 2.4 | 2.4 | 2.3 | 2.4 | 5.3 |
| | | Antiviral activity titer | 2.9 | 2.9 | 3.0 | 2.9 | - |
| | Evaluation | | ○ | ○ | ○○ | ○○ | - |

(Example 13)

[Mixing of unmodified polyvinyl alcohol powder and amino group-containing polyvinyl alcohol powder]

A powder (average particle size: 100 $\mu$m) of an unmodified polyvinyl alcohol (degree of saponification: 99 mol%, 4% by weight aqueous solution viscosity: 7 mPa·s) and the amino group-containing polyvinyl alcohol powder produced in Example 12 were mixed at a ratio of 9:1 (parts by weight). Thus, a powder sample was prepared.

(Example 14)

[Mixing of unmodified polyvinyl alcohol powder and amino group-containing polyvinyl alcohol powder]

A powder (average particle size: 100 $\mu$m) of an unmodified polyvinyl alcohol (degree of saponification: 99 mol%, 4% by weight aqueous solution viscosity: 7 mPa·s) and the amino group-containing polyvinyl alcohol powder produced in Example 12 were mixed at a ratio of 3:1 (parts by weight). Thus, a powder sample was prepared.

(Example 15)

[Mixing of unmodified polyvinyl alcohol powder and polyethyleneimine]

A powder (average particle size: 100 $\mu$m) of an unmodified polyvinyl alcohol (degree of saponification: 99 mol%, 4% by weight aqueous solution viscosity: 7 mPa·s) and polyethyleneimine (weight average molecular weight: 10,000, effective amine value: 1,008 mgKOH/g, available from Junsei Chemical Co., Ltd.) were mixed at a ratio of 3:7 (parts by weight) to prepare a sample.

(Example 16)

[Mixing of unmodified polyvinyl alcohol powder and polyethyleneimine]

An unmodified polyvinyl alcohol and polyethyleneimine were mixed as in Example 15, except that the mixing ratio was changed to 1:9 (parts by weight). The obtained mixture was used as a sample.

(Example 17)

[Mixing of cellulose powder and polyethyleneimine]

A commercially available cellulose powder (KC Flock W-400G available from Nippon Paper Industries Co., Ltd., average particle size of 24 $\mu$m) and polyethyleneimine (weight average molecular weight: 10,000, effecive amine value: 1,008 mgKOH/g, Junsei Chemical Co., Ltd.) were mixed at a ratio of 7:3 (parts by weight) to prepare a sample.

(Example 18)

[Polyethyleneimine]

Polyethyleneimine (weight average molecular weight: 10,000, effective amine value: 1,008 mgKOH/g, Junsei Chemical Co., Ltd., 10 parts by weight) alone was used as a sample.

(Comparative Example 10)

[Unmodified polyvinyl alcohol powder alone]

An unmodified polyvinyl alcohol (degree of saponification: 99 mol%, 4% by weight aqueous solution viscosity: 7 mPa·s, 10 parts by weight) alone was used as a powder sample (average particle size: 100 $\mu$m).

(Comparative Example 11)

[Cellulose powder alone]

A cellulose powder (KC Flock W-400G available from Nippon Paper Industries Co., Ltd., average particle size of 24 pm, 10 parts by weight) alone was used as a powder sample (average particle size: 24 $\mu$m).

<Evaluation 6>

The samples obtained in Examples 13 to 18 and Comparative Examples 10 to 11 were evaluated as in "(b) Antiviral property test <powder>". Table 6 shows the results. The antiviral activity value of 1.5 or higher was rated "○ (Good)" and the antiviral activity value of lower than 1.5 was rated "✕ (Poor)".

[Table 6]

| | | Example 13 | Example 14 | Example 15 | Example 16 | Example 17 | Example 18 | Comaprative Example 10 | Comparative Example 11 | Addition of virus suspension alone |
|---|---|---|---|---|---|---|---|---|---|---|
| Mixed weight (parts by weight) | Amino group-containing polyvinyl alcohol | 1 | 1 | - | - | - | - | - | - | - |
| | Unmodified polyvinyl alcohol | 9 | 3 | 3 | 1 | - | - | 10 | - | - |
| | Polyethylene imine | - | - | 7 | 9 | 3 | 10 | - | - | - |
| | Cellulose | - | - | - | - | 7 | - | - | 10 | - |
| Antiviral property test | Virus infectivity titer | 3.2 | 2.2 | 2.6 | 2.4 | 2.3 | 2.3 | 5.3 | 5.3 | 5.4 |
| | Antiviral activity value | 2.2 | 3.2 | 2.8 | 3.0 | 3.1 | 3.1 | 0.1 | 0.1 | - |
| | Evaluation | ○ | ○ | ○ | ○ | ○ | ○ | × | × | - |

(Example 19)

[Preparation of amino group-containing polyvinyl alcohol aqueous solution]

To 95 parts by weight of water was added 5 parts by weight of an amino group-containing polyvinyl alcohol (amino group-containing polyvinyl alcohol, degree of saponification: 99.0 mol%, 4% by weight aqueous solution viscosity: 6.0 mPa·s, effective amine value: 104.3 mgKOH/g), and they were heated at 80°C for three hours so that the polyvinyl alcohol was dissolved. Thus, a 5% by weight aqueous solution of an amino group-containing polyvinyl alcohol was obtained.

(A-1) Production of processed fabric (dipping)

In the obtained 5% by weight aqueous solution of an amino group-containing polyvinyl alcohol was immersed a polyester tropical cloth (polyester 100%, A4 size, weight per unit area of 120 g/m$^2$). The cloth was then squeezed using a mangle at an interroll pressure of 3.0 kgf/cm$^2$ (squeezing ratio of 79%, application amount: 95.2 g/m$^2$), and dried at 120°C/10 minutes, thereby preparing a processed fabric.

(A-2) Production of processed fabric (spraying)

The obtained 5% by weight aqueous solution of an amino group-containing polyvinyl alcohol was sprayed twice to a polyester tropical cloth (polyester 100%, A4 size, weight per unit area of 120 g/m$^2$) by hand spraying (application amount: 96 g/m$^2$) and then naturally dried (18 hours), thereby preparing a processed fabric.

(B-1) Production of processed coating film (aqueous solution coating)

The obtained 5% by weight aqueous solution of an amino group-containing polyvinyl alcohol was applied to a polyester film (polyester 100%, 7 cm × 15 cm, thickness of 0.1 mm, weight per unit area of 144 g/m$^2$) using a bar coater. The application amount was 14 g/m$^2$. Then, the film was dried at 60°C for 30 minutes to prepare a processed coating film (aqueous solution coating).

(B-2) Production of processed coating film (aqueous solution spraying)

The obtained 5% by weight aqueous solution of an amino group-containing polyvinyl alcohol was sprayed twice to a polyester film (polyester 100%, 7 cm × 15 cm, thickness of 0.1 mm, weight per unit area of 144 g/m$^2$) by hand spraying. The application amount was 16 g/m$^2$. Then, the film was naturally dried (18 hours) to prepare a processed coating film (aqueous solution spraying).

[Production of coating material for UV coating film (5% by weight polyvinyl alcohol)]

To 95 parts by weight of a UV-curable solventless acrylic resin was added 5 parts by weight of an amino group-containing polyvinyl alcohol (amino group-containing polyvinyl alcohol, degree of saponification: 99.0 mol%, 4% by weight aqueous solution viscosity: 6.0 mPa·s, effective amine value: 104.3 mgKOH/g), and they were mixed to prepare a coating material for a UV coating film (5% by weight polyvinyl alcohol).

[Production of coating material for UV coating film (10% by weight polyvinyl alcohol)]

To 90 parts by weight of a UV-curable solventless acrylic resin was added 10 parts by weight of an amino group-containing polyvinyl alcohol (amino group-containing polyvinyl alcohol, degree of saponification: 99.0 mol%, 4% by weight aqueous solution viscosity: 6.0 mPa·s, effective amine value: 104.3 mgKOH/g), and they were mixed to prepare a coating material for a UV coating film (10% by weight polyvinyl alcohol).

(C-1) Production of UV coating film (5% by weight polyvinyl alcohol)

The obtained coating material for a UV coating film (5% by weight polyvinyl alcohol) was applied to a polyester film (polyester 100%, 7 cm × 15 cm, thickness of 0.1 mm, weight per unit area of 144 g/m$^2$) using a bar coater. The application amount was 16 g/m$^2$. Then, the coating film was irradiated with UV rays (512 mJ/cm$^2$, 258 mW/cm$^2$) for 10 seconds to be cured. Thus, a UV coating film (5% by weight polyvinyl alcohol) was obtained.

(C-2) Production of UV coating film (10% by weight polyvinyl alcohol)

The obtained coating material for a UV coating film (10% by weight polyvinyl alcohol) was applied to a polyester film (polyester 100%, 7 cm × 15 cm, thickness of 0.1 mm, weight per unit area of 144 g/m$^2$) using a bar coater. The application amount was 16 g/m$^2$. Then, the film was irradiated with UV rays (512 mJ/cm$^2$, 258 mW/cm$^2$) for 10 seconds to be cured. Thus, a UV coating film (10% by weight polyvinyl alcohol) was obtained.

(Comparative Example 12)

[Preparation of polyvinyl alcohol aqueous solution]

To 95 parts by weight of water was added 5 parts by weight of an unmodified polyvinyl alcohol (degree of saponification: 99 mol%, 4% by weight aqueous solution viscosity: 7 mPa·s), and they were heated at 80°C for three hours so that the polyvinyl alcohol was dissolved. Thus, a 5% by weight polyvinyl alcohol aqueous solution was obtained.
Using the obtained 5% by weight polyvinyl alcohol aqueous solution, a processed fabric (dipping), a processed fabric (spraying), a processed coating film (aqueous solution coating), a processed coating film (aqueous solution spraying), and a UV coating film (5% by weight polyvinyl alcohol) were obtained as in (A-1), (A-2), (B-1), (B-2), and (C-1) in Example 19.

<Evaluation 7>

Antiviral property test

An antiviral property test as in "(4) Antiviral property test" was performed on the processed fabrics (dipping), processed fabrics (spraying), processed coating films (aqueous solution coating), processed coating films (aqueous solution spraying), UV coating films (5% by weight polyvinyl alcohol), and UV coating film (10% by weight polyvinyl alcohol) obtained in Example 19 and Comparative Example 12. The antiviral activity value of 1.5 or higher was rated "○ (Good)" and the antiviral activity value of lower than 1.5 was rated "× (Poor)".

(Procedure for testing processed fabric)

With regard to the processed fabric, the test was performed as in "(4) Antiviral property test" described above, except that "10 mg of powder sample" was changed to "0.4 g of processed fabric sample" in the step (ii). In addition, in the step (iii), the amount of the SCDLP medium was changed from "10 ml" to "20 ml".

(Procedure for testing processed coating film and UV coating film)

With regard to the processed coating film and UV coating film, the test was performed as in "(4) Antiviral property test" described above, except that the steps (ii) and (iii) were changed as follows.

(ii) A coating film sample (5 cm × 5 cm) was secured on the bottom face of a Petri dish (φ90 × 20) with double-sided tape, and 0.4 mL of the virus suspension was dripped to the center. The sample was slowly covered with a polyester film (4 cm × 4 cm), and left to stand at 25°C for 24 hours. With an aim of preventing drying of the virus suspension, a kimwipe impregnated with 1 ml of sterilized water was secured on the lid of the Petri dish.
(iii) Then, 10 ml of the SCDLP medium was added to the Petri dish, and the Petri dish was shaken for washing out, thereby extracting 0.1 ml of a washed-out solution.

[Table 7]

| | Form | Polyvinyl alcohol | | Application amount (g/m²) | Antiviral property test | | |
| --- | --- | --- | --- | --- | --- | --- | --- |
| | | Type | | | Virus infectivity titer | Antiviral activity value | Evaluation |
| Example 19 | (A-1) Processed fabric (Dipping) | Amino group-containing polyvinyl alcohol | | 95.2 | 4.2 | 3.9 | ○ |
| | (A-2) Processed fabric (Spraying) | Amino group-containing polyvinyl alcohol Amino group-containing polyvinyl alcohol | | 96 | 4.6 | 3.5 | ○ |
| | (B-1) Processed coating film (Aqueous solution coating) | | | 14 | 2.0 | 4.5 | ○ |
| | (B-2) Processed coating film (Aqueous solution spraying) | Amino group-containing polyvinyl alcohol | | 16 | 3.2 | 3.3 | ○ |
| | (C-1) UV coating film (5 wt% PVA) | Amino group-containing polyvinyl alcohol | | 16 | 2.5 | 4.0 | ○ |
| | (C-2) UV coating film (10 wt% PVA) | Amino group-containing polyvinyl alcohol | | 16 | 2.0 | 4.5 | ○ |
| Comparative Example 12 | (A-1) Processed fabric (Dipping) | Unmodified polyvinyl alcohol | | 95.2 | 7.5 | 0.6 | × |
| | (A-2) Processed fabric (Spraying) | Unmodified polyvinyl alcohol | | 96 | 7.5 | 0.6 | × |
| | (B-1) Processed coating film (Aqueous solution coating) | Unmodified polyvinyl alcohol | | 14 | 6.2 | 0.3 | × |
| | (B-2) Processed coating film (Aqueous solution spraying) | Unmodified polyvinyl alcohol | | 16 | 5.9 | 0.6 | × |
| | (C-1) UV coating film (5 wt% PVA) | Unmodified polyvinyl alcohol | | 16 | 6.2 | 0.3 | × |

INDUSTRIAL APPLICABILITY

The present invention can provide an antibacterial and antiviral composition capable of exhibiting antibacterial and antiviral properties in a short period of time and excellent in handleability and safety. The present invention can also provide antibacterial and antiviral particles, a processed fabric, a coating material for a processed coating film, a processed coating film, a coating material for a UV-cured coating film, and a UV-cured coating film each prepared using the antibacterial and antiviral composition.

**Claims**

1. An antibacterial and antiviral composition comprising:

a polymer compound having antibacterial and antiviral properties,
the polymer compound being an amino group-containing polymer.

2. The antibacterial and antiviral composition according to claim 1,
wherein the polymer compound has an amino group and a hydroxy group in the same molecule.

3. The antibacterial and antiviral composition according to claim 2,
wherein the polymer compound is an amino group-containing polyvinyl alcohol.

4. The antibacterial and antiviral composition according to claim 1, 2, or 3, further comprising a hydroxy group-containing polymer.

5. The antibacterial and antiviral composition according to claim 1, 2, 3, or 4, which has an antiviral activity value of 2 or higher.

6. Antibacterial and antiviral particles comprising the antibacterial and antiviral composition according to claim 1, 2, 3, 4, or 5.

7. A processed fabric comprising the antibacterial and antiviral composition according to claim 1, 2, 3, 4, or 5 on its surface.

8. A coating material for a processed coating film comprising the antibacterial and antiviral composition according to claim 1, 2, 3, 4, or 5.

9. A processed coating film formed from the coating material for a processed coating film according to claim 8.

10. A coating material for a UV-cured coating film comprising:
the antibacterial and antiviral composition according to claim 1, 2, 3, 4, or 5; and
a UV-curable resin.

11. A UV-cured coating film formed from the coating material for a UV-cured coating film according to claim 10.

## INTERNATIONAL SEARCH REPORT

| International application No. |
|---|
| PCT/JP2017/013776 |

**A. CLASSIFICATION OF SUBJECT MATTER**
*A01N33/04*(2006.01)i, *A01N25/34*(2006.01)i, *A01N33/08*(2006.01)i, *A01P1/00*(2006.01)i, *A01P3/00*(2006.01)i, *C09D5/14*(2006.01)i, *D06M15/333*(2006.01)i, *D06M15/61*(2006.01)i

According to International Patent Classification (IPC) or to both national classification and IPC

**B. FIELDS SEARCHED**

Minimum documentation searched (classification system followed by classification symbols)
A01N1/00-65/48, A01P1/00-23/00, C09D1/00-201/10, D06M15/00-15/715

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
CAplus(STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2011-506488 A (Novapharm Research (Australia) PTY Ltd.), 03 March 2011 (03.03.2011), claims; paragraphs [0019] to [0021]; examples<br>& AU 2008338250 A     & BR PI0819417 A<br>& CA 2708534 A1     & CN 101969768 A<br>& EP 2227084 A1     & KR 10-2010-0098436 A<br>& US 2010/0260865 A1     & WO 2009/076718 A1<br>claims; page 4, line 22 to page 5, line 4; examples | 1-6<br>7-11 |
| X<br>Y | JP 48-7087 B1 (Shell International Research Maatschappij N.V.), 02 March 1973 (02.03.1973), claims; column 29, lines 13 to 19; examples (Family: none) | 1-2,4-6<br>7-11 |

☒ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 May 2017 (16.05.17) | 30 May 2017 (30.05.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

International application No.

PCT/JP2017/013776

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2001-233724 A (L'Oreal),<br>28 August 2001 (28.08.2001),<br>claims; paragraph [0018]; examples<br>& AT 256392 T1 & DE 60101486 T2<br>& EP 1123653 A1 & ES 2213671 T3<br>& FR 2804286 A1 & US 2001/0036914 A1<br>claims; paragraph [0050]; examples | 1-2,4-6<br>7-11 |
| X<br>Y | JP 2014-528995 A (Nanyang Technological University),<br>30 October 2014 (30.10.2014),<br>claims; paragraph [0075]; examples<br>& CN 103857702 A & EP 2748204 A1<br>& US 2014/0228279 A1 & WO 2013/052012 A1<br>claims; paragraph [0082]; examples | 1-2,4-6<br>7-11 |
| X<br>Y | JP 11-509842 A (Intrabiotics Pharmaceuticals, Inc.),<br>31 August 1999 (31.08.1999),<br>claims; page 38, lines 17 to 19; examples<br>& AU 6452996 A & AU 714294 B<br>& CA 2226121 A1 & EP 836617 A1<br>& US 2002/0147301 A1 & US 6307016 B1<br>& US 38828 E & WO 97/02287 A1<br>claims; page 27, lines 22 to 24; examples | 1-2,4-6<br>7-11 |
| X<br>Y | JP 55-12882 B1 (Tokyo Organic Chemical Industries, Ltd.),<br>04 April 1980 (04.04.1980),<br>claims; column 3, lines 12 to 15; examples<br>(Family: none) | 1,5-6<br>7-11 |
| X<br>Y | JP 54-160724 A (Mitsubishi Chemical Industries Ltd.),<br>19 December 1979 (19.12.1979),<br>claims; page 3, upper left column, lines 12 to 15; examples<br>(Family: none) | 1,5-6<br>7-11 |
| X<br>Y | JP 2008-115506 A (Shikibo Ltd.),<br>22 May 2008 (22.05.2008),<br>claims; paragraph [0009]; examples<br>(Family: none) | 1,5-7<br>7-11 |
| Y | JP 2011-57855 A (The University of Tokushima et al.),<br>24 March 2011 (24.03.2011),<br>claims; paragraph [0059]; examples<br>(Family: none) | 8-11 |

Form PCT/ISA/210 (continuation of second sheet) (January 2015)

**REFERENCES CITED IN THE DESCRIPTION**

**Patent documents cited in the description**

• JP 2015120896 A